# DEMANDE DE BREVET EUROPEEN

(11) **EP 1 491 721 A1**
(43) Date de publication de la demande: **29.12.2004**
(21) Numéro de dépôt: 04291461.4
(22) Date de dépôt: 11.06.2004
(51) Int. Cl.: F01D 5/14

(54) **Aube de compresseur de turboréacteur**

(30) Priorité: 27.06.2003 FR 0307809
(71) Demandeur: Snecma Moteurs, 75724 Paris Cedex 15 (FR)
(72) Inventeur: Naudet, Jacky, 91070 Bondoufle (FR)
(74) Mandataire: David, Daniel

(57) **Abrégé**

L'aube de compresseur de moteur à turbine à gaz de l'invention comprend un pied à attache marteau pour être inséré dans une gorge circonférentielle du rotor du compresseur, une plate-forme (12) solidaire du pied et supportant une pale (13), la plate-forme comprenant deux bords perpendiculaires à l'axe du rotor (20, 21) et deux flancs (22, 23) incurvés, la courbe des flancs étant construite à partir d'au moins une courbe définie par une équation, le centre de courbure du point de la courbe dont le rayon de courbure est le plus faible se situant à l'intérieur d'une bande (B) centrale à la plate-forme (12) et représentant 60% de la largeur (D) de la plate-forme (12) mesurée entre ses bords rectilignes parallèles (20, 21), l'équation définissant la courbe étant, au sens des fonctions mathématiques, continue et à dérivée première continue.

## Description

La présente invention concerne la fixation d'une aube sur un rotor de turbomachine et en particulier d'une aube de rotor de compresseur axial de moteur à turbine à gaz.

Dans les turboréacteurs les étages à haute pression des compresseurs comprennent généralement un grand nombre d'aubes montées dans une gorge circonférentielle du rotor. Les aubes comprennent un pied, sur lequel est montée une plate-forme soutenant une pale. Les aubes sont dites à attache marteau avec une forme adaptée à celle de la gorge circonférentielle du rotor qui présente des flancs formant une surface d'appui en direction radiale centrifuge.

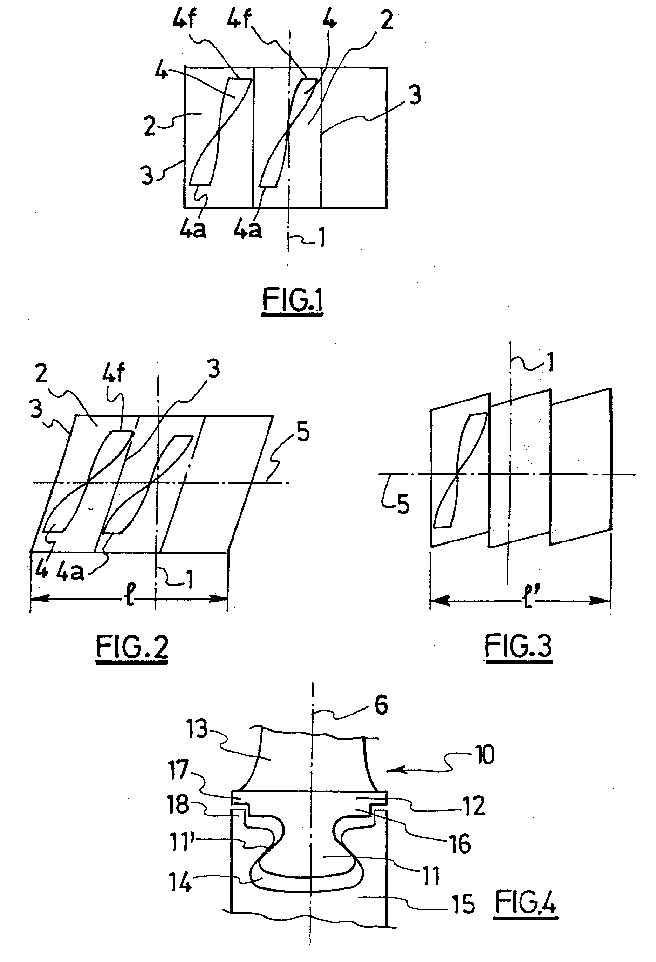

Comme on peut le voir sur la figure 1, dans les compresseurs de l'art antérieur, les plates-formes 2 étaient rectangulaires, leurs flancs 3 parallèles à l'axe 1 du rotor.

L'amélioration des rendements des compresseurs a entraîné une diminution du pas des aubes et une augmentation de leur angle d'inclinaison par rapport à l'axe du moteur. Il est donc devenu nécessaire d'incliner les flancs des plates-formes, afin de pouvoir loger un plus grand nombre d'aubes, comme on le voit sur la figure 2.

En raison des forces perpendiculaires à l'axe de rotation 1, comme par exemple les forces d'inertie et les forces aérodynamiques exercées sur elles, les aubes sont amenées à pivoter autour de l'axe longitudinal des pales 4. Les plates-formes 2 glissent les unes par rapport aux autres pour se placer dans une position telle que celle de la figure 3. Les plates-formes 2 tendent alors à s'empiler suivant la plus courte dimension circonférentielle, c'est-à-dire suivant une largeur 1', par rapport au plan du rotor 5, inférieure à la largeur 1 initiale. Autrement dit, en fonctionnement, les plates-formes 2 se présentent suivant leur plus petite largeur par rapport au plan du rotor 5.

Ce glissement des plates-formes 2 est autorisé par le jeu existant entre les pieds des aubes et leur logement ainsi qu'entre les plates-formes 2 et leur logement.

### Ce glissement a de multiples inconvénients :

Puisque la dimension l'est inférieure à la dimension 1, il induit des jeux importants au niveau des plates-formes, qui entraînent des fuites.

Il favorise la rotation des aubes dans le sens de l'augmentation de l'angle de calage des pales 4, ce qui est néfaste au rendement du compresseur.

Les pieds ne sont pas en appui convenable dans leur logement sur les surfaces prévues à cet effet lors de leur conception, ce qui se traduit par un matage des surfaces et une augmentation des niveaux de contrainte locale dans le disque et le pied d'aube.

On constate aussi lors de l'opération de mise à longueur de l'extrémité des pales 2, que la force centrifuge ne suffit pas à amener les aubes à se remettre dans la bonne position. A petite vitesse, les aubes pivotent et se bloquent en mauvaise position par frottement, pour après ne plus se remettre en bonne position, même à vitesse de rotation élevée.

On a donc cherché à donner aux flancs des plates-formes, un profil tel que pour une même rotation de chaque aube provoquée par un effort tangentiel, ils ne glissent pas les uns sur les autres et tel que les forces de contact s'opposent à la rotation.

Le brevet américain US 4, 878, 811 propose des plates-formes dont les flancs comportent deux portions rectilignes parallèles à l'axe de rotation et décalées, reliés par une portion oblique. Cette solution a pour but de réduire la rotation des pales et d'éviter les fuites entre les plates-formes en limitant le glissement des plates-formes les unes par rapport aux autres. Elle entraîne cependant un usinage malaisé des plates-formes, car chaque flanc comporte plusieurs entités d'usinage.

La présente invention vise à pallier ces inconvénients.

A cet effet, l'invention concerne une aube d'un rotor de turbomachine, comprenant un pied inséré dans une gorge annulaire longitudinale du rotor, une plate-forme solidaire du pied et supportant une pale, la plate-forme comprenant deux bords longitudinaux et deux flancs incurvés formant une courbe, caractérisée par le fait que la courbe est construite à partir d'au moins une courbe définie par une équation, le centre de courbure du point de la courbe dont le rayon de courbure est le plus faible se situant à l'intérieur d'une bande centrale à la plate-forme et représentant 60% de la largeur de la plate-forme mesurée entre ses bords rectilignes parallèles, l'équation définissant la courbe étant, au sens des fonctions mathématiques, continue et à dérivée première continue.

Grâce à cette définition de la forme des flancs incurvés des plates-formes, si les aubes ne sont pas placées correctement, elles reviennent naturellement dans la bonne position lors de la rotation du rotor. De surcroît, l'usinage des flancs des plates-formes peut être fait en une seule entité d'usinage.

L'invention concerne particulièrement une aube de rotor de compresseur de moteur à turbine à gaz, mais la demanderesse n'entend pas limiter la portée de ses droits à cette application.

La présente invention sera mieux comprise à l'aide de la description suivante de la forme de réalisation préférée de l'aube de l'invention, en référence au dessin annexé, sur lequel :
- la figure 1 représente une vue schématique de dessus d'aubes à flancs parallèles à l'axe de rotation du compresseur de l'art antérieur ;
- la figure 2 représente une vue schématique de dessus d'aubes à flancs parallèles inclinés par rapport à l'axe de rotation du compresseur de l'art antérieur ;
- la figure 3 représente une vue schématique de dessus du glissement des aubes à flancs parallèles inclinés par rapport à l'axe de rotation du compresseur de l'art antérieur ;
- la figure 4 représente une vue schématique de côté de l'aube de l'invention ;
- la figure 5 représente une vue schématique de dessus de trois aubes de l'invention ;
- la figure 6 représente une vue schématique de dessus de trois aubes de l'invention après une rotation suivant l'axe longitudinal des pales, et
- la figure 7 représente une vue schématique de dessus de trois aubes de l'invention après un glissement le long de leurs flancs.

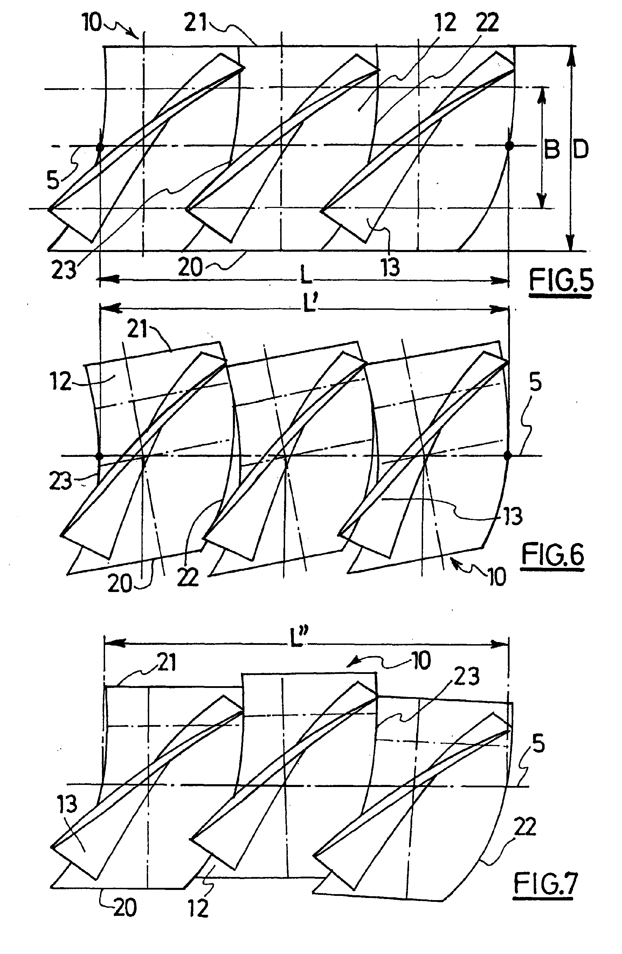

En référence à la figure 4, l'aube 10 de l'invention comporte un pied 11, dit pied marteau en raison de sa base oblongue se rétrécissant vers le haut, solidaire d'une plate-forme 12 supportant une pale 13.

Le pied 11 est inséré dans une gorge annulaire 14 du rotor 15 du compresseur, sa surface supérieure 11' venant en appui sur la paroi interne de la gorge lorsque le rotor 15 est en rotation, du fait des forces centrifuges.

La portion inférieure 16 de la plate-forme 12, de largeur inférieure à celle de sa partie supérieure 17, supportant la pale 13, vient en appui latéral contre une jante 18 du rotor 15, avec un jeu permettant, d'une part, le montage des aubes 10 dans la gorge 14, d'autre part, l'élévation de l'aube 10 jusqu'au contact de la surface supérieure 11' du pied 11 avec la paroi interne de la gorge 14 lors de la rotation du rotor 15.

Il appartient à l'homme du métier de définir la géométrie du pied 11 et de la pale 13 de l'aube 10, l'invention résidant dans la forme de la plate-forme 12.

En référence à la figure 5, la plate-forme 12 de l'invention comprend, en vue de dessus plane, deux bords 20, 21 transversaux rectilignes perpendiculaire à l'axe du rotor. Elle comprend en outre des flancs 22, 23 reliant les deux bords, qui sont de forme curviligne.

Un des objectifs de l'invention est de pouvoir usiner les flancs 22, 23 de la plate-forme 12 sans changer l'angle d'attaque de la fraise, c'est-à-dire selon une seule entité d'usinage. Ainsi, et dans l'optique également selon laquelle les aubes 12 ne doivent pas pivoter selon l'axe longitudinal 6 des pales 13, la courbe définissant les flancs 22, 23 de la plate-forme 12 de l'invention répond à certaines conditions.

Ainsi, la courbe définissant les flancs 22, 23 de la plate-forme 12 doit être construite à partir d'une courbe définie par une équation, ou un ensemble de courbes définies par des équations, avec la condition suivante : le centre de courbure de la portion la plus incurvée de la courbe, c'est-à-dire le centre de courbure correspondant au rayon de courbure le plus petit, doit être contenu dans la bande B centrale à la plate-forme 12 représentant 60% de la largeur D de la plate-forme 12, mesurée entre ses bords rectilignes parallèles 20, 21. De surcroît, la courbe doit être, au sens des fonctions mathématiques, continue et à dérivée première continue.

En particulier, la courbe définissant les flancs 22, 23 de la plate-forme peut être définie par un assemblage de cercles tangents, le centre du cercle de plus petit rayon devant se trouver dans la bande B définie ci-dessus.

La courbe peut également, à titre d'exemple, être définie à partir de courbes telles que des spirales, des épicycloïdes ou des développantes de cercle.

En référence à la figure 6, où les trois plates-formes 12 de la figure 5 ont été simulées après un pivotement autour de l'axe longitudinal 6 de leur pale 13, on voit que la largeur L' que présentent alors les plates-formes 12, par rapport au plan de l'aubage 5, est supérieure à la longueur L que présente les aubes 12 lorsqu'elles sont correctement disposées, c'est-à-dire avec les flancs 22, 23 des plates-formes voisines adjacents, et leurs bords 20, 21 colinéaires. La largeur L' étant supérieure à la largeur L, et d'après ce qui a été dit dans le préambule, les plates-formes auront tendance à se remettre dans la bonne position, de la figure 5, lors de la rotation du rotor.

En référence à la figure 7, où les trois plates-formes 12 de la figure 5 ont été simulées après un glissement les unes par rapport aux autres le long de leurs flancs 22, 23 adjacents, c'est-à-dire en décalant leurs bords 20, 21 sans les garder alignés entre voisins, on voit que la largeur L" que présentent alors les plates-formes 12, par rapport au plan de l'aubage 5, est supérieure à la longueur L que présentent les aubes 12 lorsqu'elles sont correctement disposées. De même, dans ce cas, les aubes auront donc tendance à se remettre dans la bonne position lors de la rotation du rotor.

La disposition des aubes 10 de l'invention autour du rotor 12 se fait de façon classique, les aubes 10 étant insérées une à une dans la gorge 14, et bloquées circonférentiellement par un certain nombre de verrous.

La portion inférieure 16 de la plate-forme 12 de l'invention est adjacente à sa portion supérieure 17 au niveau des flancs 22, 23, et de largeur inférieure à sa portion supérieure 17 au niveau des bords 20, 21.

## Revendications

1. Aube (10) d'un rotor de turbomachine, comprenant un pied (11) à attache marteau pour être inséré dans une gorge (14) circonférentielle du rotor (15), une plate-forme (12) solidaire du pied (11) et supportant une pale (13), la plate-forme comprenant deux bords perpendiculaires à l'axe du rotor (20, 21) et deux flancs (22, 23) incurvés, **caractérisée par le fait que** la courbe des flancs est construite à partir d'au moins une courbe définie par une équation, le centre de courbure du point de la courbe dont le rayon de courbure est le plus faible se situant à l'intérieur d'une bande (B) centrale à la plate-forme (12) et représentant 60% de la largeur (D) de la plate-forme (12) mesurée entre ses bords rectilignes parallèles (20, 21), l'équation définissant la courbe étant, au sens des fonctions mathématiques, continue et à dérivée première continue.

2. Aube (10) selon la revendication 1, dans laquelle la courbe est construite à partir d'un assemblage de cercles tangents.

3. Aube (10) selon l'une des revendications 1 et 2, dans laquelle la courbe est définie à partir une courbe telle qu'une spirale, une épicycloïde ou une développante de cercle.

4. Aube selon l'une des revendications 1 à 3, qui est une aube d'un rotor de compresseur d'un moteur à turbine à gaz.
